# EUROPEAN PATENT SPECIFICATION

(11) **EP 2 551 143 B1**
(45) Date of publication and mention of the grant of the patent: **30.03.2016**
(21) Application number: 12177818.7
(22) Date of filing: 25.07.2012
(51) Int. Cl.: B60L 5/18, B60M 1/28, G01R 31/02

(54) **Vehicle infrared monitoring system for electrified railway catenary**
Fahrzeuginfrarot-Überwachungssystem für die elektrifizierte Eisenbahnoberleitung
Système de surveillance infrarouge de véhicule pour caténaire ferroviaire électrifiée

(30) Priority: 26.07.2011 CN 201120264837 U
(43) Date of publication of application: 30.01.2013
(73) Proprietor: Guangzhou Keii Electro Optics Technology Co., Ltd., Guangzhou, Guangdong 510663 (CN)
(72) Inventor: Wu, Xiaosong, 510663 Guangzhou (CN); Yuan, Jie, 510663 Guangzhou (CN)
(74) Representative: Hryszkiewicz, Danuta

(56) References cited:
- EP-A1- 2 048 021
- WO-A1-02/21076
- CN-Y- 2 700 166
- JP-A- 2001 235 310
- JP-A- 2004 042 837

## Description

The invention relates to a monitoring technology for an electrified railway catenary, and more particularly to a vehicle infrared monitoring system for an electrified railway catenary.

An electric locomotive obtains necessary energy for running from a catenary via a pantograph. The contact between the pantograph and the catenary is an important condition for assuring the current collection at high speed. During this process, the pantograph and the catenary have mutual restraint and interdependence in electric and mechanical respects. With the speed improvement of the electric locomotive, the dynamic performance of the pantograph and the catenary is getting worse, and the variation range of contact pressure is enlarging. When the contact pressure is too small, contact resistance will correspondingly increase, thus, the current collection cannot be assured. Once the separation between the pantograph and catenary happens, it would lead to bad results. The fault of pantograph/catenary always accompanies severe heat release, for example, arc discharge at the moment of the separation would burn the contact line and the interface of the pantograph slide, continuous or discontinuous separation would damage the normal power supply, or even damage electronic components in the locomotive, etc. Thus, with the development of the high speed railway transportation system, an apparatus that can real-time monitor the temperature of pantograph-catenary contact and specifically locate the contact position is needed, to make sure the catenary work well and the electric locomotive run normally.

JP 2001 235310 discloses a vehicle infrared monitoring system according to the preamble of claim 1.

In view of the above-described problems, it is one objective of the invention to provide a vehicle infrared monitoring system for an electrified railway catenary for real-time monitoring the temperature of pantograph-catenary contact, and specifically locating fault positions.

The above objective is achieved with the special features of claim 1.

The vehicle infrared monitoring system further comprises a lidar which is fixed on the roof of the locomotive for measurement of a catenary height and stagger value of the contact position of the pantograph and the catenary. The lidar is connected to the industrial control computer via a communication cable. In addition, the monitoring box further comprises an ambient temperature sensor connected to the industrial control computer via a communication cable.

There are two groups of the monitoring boxes, one is fixed on a front part of the roof of the locomotive to monitor a front pantograph, and the other is fixed on a rear part of the roof of the locomotive to monitor a rear pantograph.

The industrial control computer comprises a hot-swap hard drive to store monitoring data, and a data communication module to convey abnormal data obtained by the monitoring box to a ground center.

The vehicle infrared monitoring system further comprises a Global Positioning System (GPS) connected to the industrial control computer via a communication cable.

Advantages of the invention are summarized below: this invention utilizes infrared thermal imaging technology to real-time monitor the pantograph-catenary contact position of the electrified railway, monitoring the performance of the pantograph-catenary contact via the change of the temperature, and the impact of the ambient temperature is exempted with the ambient temperature sensor. Thus, the monitoring results are credible. Measurements of the catenary height (the distance between the catenary and the track plane) and stagger value through the lidar are conducive to qualitatively analyzing the causes of faults, and thus convenient to response. Running time marks and distance marks obtained from the TAX box of the locomotive can locate fault positions. The hot-swap hard drive is convenient to transfer monitoring data, and has great significance in the whole line maintenance and the study of the pantograph-catenary technology. The equipped communication module is designed to detect faults, send maintenance reports in time, and make sure problems to be solved as soon as possible.

The invention is described hereinbelow with reference to the accompanying drawings, in which:
FIG. 1 is a structural diagram of a vehicle infrared monitoring system for an electrified railway catenary of the invention;
FIG. 2 is a first image data of infrared detection;
FIG. 3 is a second image data of infrared detection;
FIG. 4 is a third image data of infrared detection; and
FIG. 5 is a detecting temperature profile.

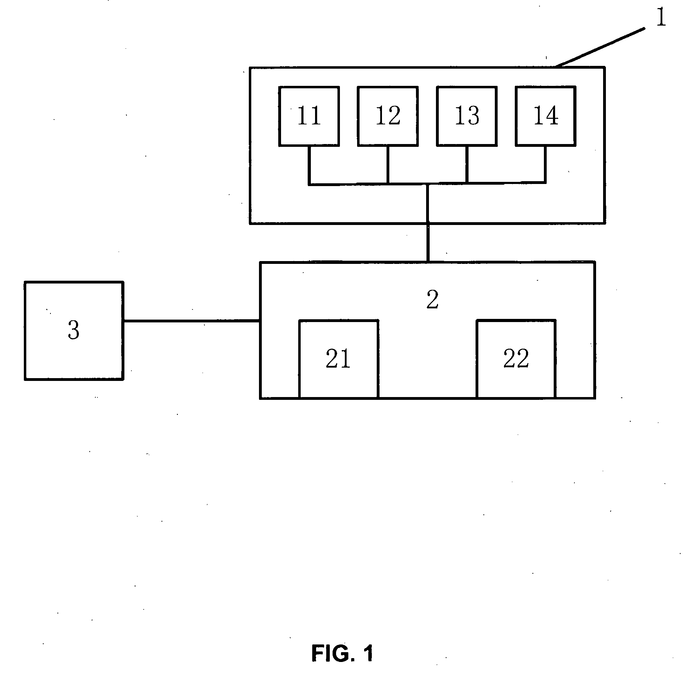

As illustrated in FIG. 1, a vehicle infrared monitoring system for an electrified railway catenary comprises a monitoring box 1 fixed on a roof of a locomotive and an industrial control computer 2 equipped in a carriage of the locomotive. The monitoring box 1 comprises an infrared thermal imager 11 and a visible light camera 12, and the field angles of the infrared thermal imager 11 and the visible light camera 12 enclose a contact position of a pantograph and the catenary. The infrared thermal imager 11 gathers infrared images and temperature data of the contact position, and the visible light camera 12 gathers optical video data of the contact position.

The monitoring box 1 and the industrial control computer 2 are connected together via an integrated signal cable which comprises a network signal line, a video signal line, and a power cord. The network signal line is used to connect the infrared thermal imager and the industrial control computer, conveying infrared images and temperature data; the video signal line is used to connect the visible light camera and the industrial control computer, conveying optical video data; and the power cord supplies power to the infrared thermal imager and the visible light camera at the same time; the industrial control computer is connected to a TAX box 3 via serial ports, and gets the running time mark and distance mark from the TAX box 3.

A lidar 13 is fixed on the roof of the locomotive for measurement of the catenary height and the stagger value at the contact position of the pantograph and the catenary, and is connected to the industrial control computer 2 via serial ports. The lidar 13 can be installed in the monitoring box 1. In addition, the monitoring box 1 further comprises an ambient temperature sensor 14 connected to the industrial control computer 2 via serial ports.

The vehicle infrared monitoring system further comprises a Global Positioning System (GPS) connected to the industrial control computer via a communication cable. The GPS functions as an auxiliary positioning device.

The industrial control computer 2 comprises a hot-swap hard drive 21 to store monitoring data, and a data communication module 22 to convey abnormal data obtained by the monitoring box to a ground center. The abnormal data comprises information of infrared images, temperature data, optical video data, catenary height, stagger value, running time mark, distance mark, and GPS.

Nowadays, most of the locomotives are bidirectional driving, and a locomotive is always equipped with two pantographs. Thus, there are two groups of the monitoring boxes 1 in this invention, one is fixed on a front part of the roof of the locomotive to monitor a front pantograph, and the other is fixed on a rear part of the roof of the locomotive to monitor a rear pantograph.

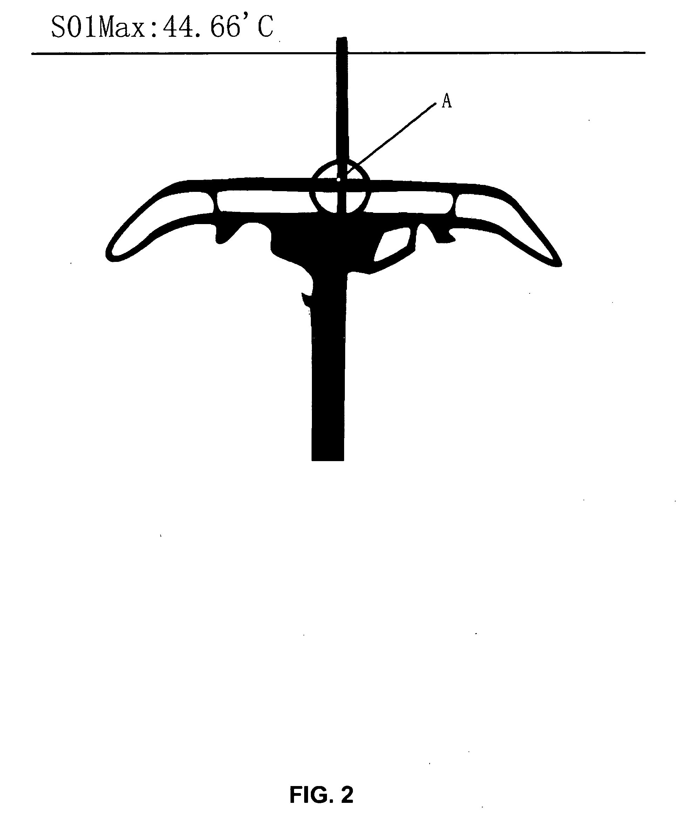

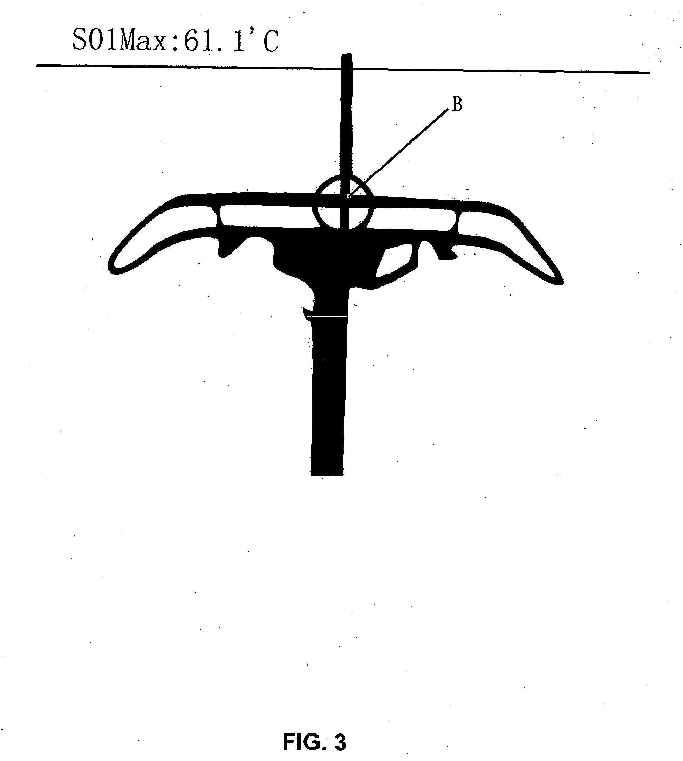

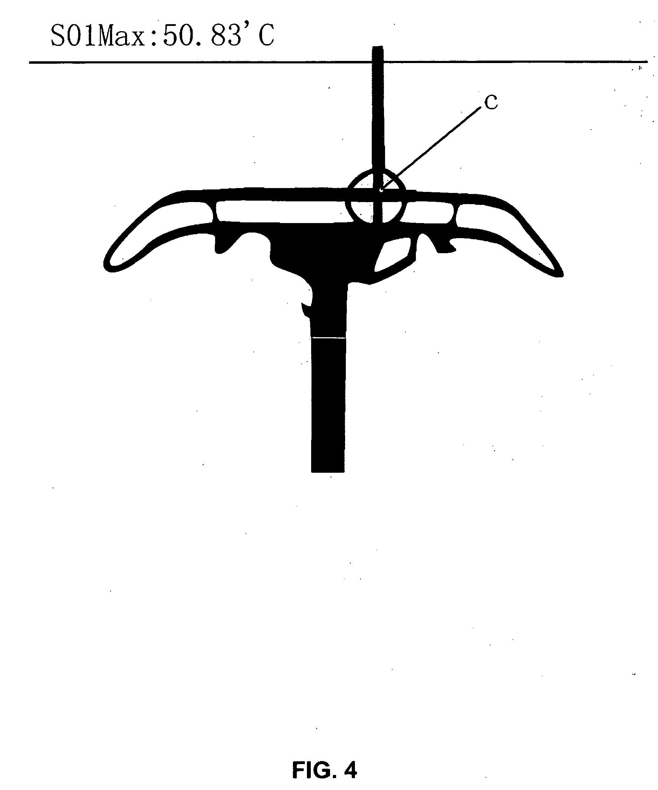

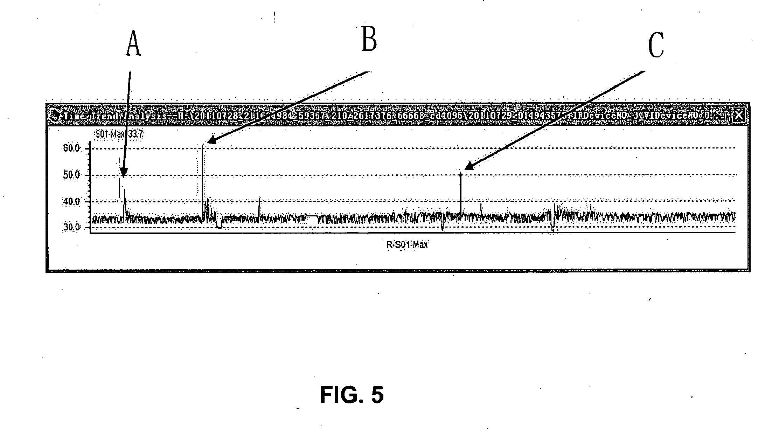

As illustrated in FIGS. 2-5, FIG. 2, FIG. 3, and FIG. 4 are infrared images and temperature data from three different detecting positions A, B, and C on a 1 Km long railway catenary, and FIG. 5 is a temperature profile from the pantograph-catenary contact position. As shown in the figures, the average contact temperature is about 34°C, the ambient temperature gathered from the ambient temperature sensor is 25°C, and the figures of infrared temperature clearly indicate that these three detected fault positions are at much higher temperature than the average contact temperature. Thus, there are obvious line faults existing in these three positions. At the same time, the real catenary height and stagger value can be measured by a lidar, and after compared with the standard values, causes of faults can be known.

## Claims

1. A vehicle infrared monitoring system for an electrified railway catenary, comprising a monitoring box (1) fixed on a roof of a locomotive, and an industrial control computer (2) installed in a locomotive carriage and connected to the monitoring box (1) via a signal cable, the monitoring box (1) comprising a visible light camera (12), and field angles of the visible light camera (12) enclosing a contact position of a pantograph and the catenary;
**characterized in that**
the industrial control computer (2) is connected to an information system for locomotive operation (TAX box (3)) via a communication cable to obtain running time mark and distance mark of the locomotive;
the monitoring box (1) further comprises an infrared thermal imager (11), field angles of the infrared thermal imager (11) enclosing the contact position;
the infrared thermal imager (11) gathers infrared images of the contact position and temperature data of the contact position;
the visible light camera (12) gathers optical video data of the contact position;
the signal cable comprises a network signal line, a video signal line, and a power cord;
the network signal line connects the infrared thermal imager (11) to the industrial control computer (2) and conveys the infrared images and the temperature data to the industrial control computer (2);
the video signal line connects the visible light camera (12) to the industrial control computer (2) and conveys the optical video data to the industrial control computer (2); and
the power cord supplies power to the infrared thermal imager (11) and the visible light camera (12).

2. The system of claim 1, further comprising a lidar (13) fixed on the roof of the locomotive and connected to the industrial control computer (2) via a communication cable for measurement of a catenary height and stagger value at the contact position of the pantograph and the catenary.

3. The system of claim 1, **characterized in that** the monitoring box (1) further comprises an ambient temperature sensor (14) connected to the industrial control computer (2) via a communication cable.

4. The system of claim 1, further comprising a Global Positioning System (GPS) connected to the industrial control computer (2) via a communication cable.

5. The system of any of claims 1 to 4, **characterized in that** there are two groups of the monitoring boxes, one is fixed on a front part of the roof of the locomotive to monitor a front pantograph and the other is fixed on a rear part of the roof of the locomotive to monitor a rear pantograph.

6. The system of any of claims 1 to 4, **characterized in that** the industrial control computer (2) comprises a hot-swap hard drive (21) to store monitoring data.

7. The system of any of claims 1 to 4, **characterized in that** the industrial control computer (2) comprises a data communication module (22) to convey abnormal data obtained by the monitoring box (1) to a ground center.

8. The system of claim 6, **characterized in that** the industrial control computer (2) further comprises a data communication module (22) to convey abnormal data obtained by the monitoring box (1) to a ground center.

## Patentansprüche

1. Infrarotüberwachungssystem eines Fahrzeugs für die Oberleitung einer elektrifizierten Eisenbahn, umfassend eine Überwachungsbox (1), die auf einem Dach einer Lokomotive befestigt ist, und einen industriellen Steuercomputer (2), der in einem Waggon der Lokomotive installiert ist und der über ein Signalkabel und mit der Überwachungsbox (1) verbunden ist, wobei die Überwachungsbox (1) eine Kamera (12) für sichtbares Licht umfasst und Feldwinkel der Kamera (12) für sichtbares Licht eine Kontaktposition eines Pantographen und der Oberleitung einschließen;
**dadurch gekennzeichnet, dass**
der industrielle Steuercomputer (2) mit einem Informationssystem für Lokomotivenbetrieb (TAX box (3)) über ein Übertragungskabel verbunden ist, um eine Laufzeitkennzeichnung und eine Distanzkennzeichnung der Lokomotive zu erhalten;
die Überwachungsbox (1) ferner ein Infrarotwärmebildgerät (11) umfasst, wobei Feldwinkel des Infrarotwärmebildgerätes (11) die Kontaktposition einschließen;
das Infrarotwärmebildgerät (11) Infrarotbilder der Kontaktposition und Temperaturdaten der Kontaktposition sammelt;
die Kamera (12) für sichtbares Licht optische Videodaten der Kontaktposition sammelt;
das Signalkabel eine Netzwerksignalleitung, eine Videosignalleitung und ein Stromkabel umfasst;
die Netzwerksignalleitung das Infrarotwärmebildgerät (11) mit dem industriellen Steuercomputer (2) verbindet und die Infrarotbilder und die Temperaturdaten an den industriellen Steuercomputer (2) überträgt;
die Videosignalleitung die Kamera (12) für sichtbares Licht mit dem industriellen Steuercomputer (2) verbindet und optische Videodaten an den industriellen Steuercomputer (2) überträgt; und
das Stromkabel Strom an das Infrarotwärmebildgerät (11) und an die Kamer (12) für sichtbares Licht liefert.

2. System nach Anspruch 1, ferner umfassend eine Lidar-Vorrichtung (13), die auf dem Dach der Lokomotive befestigt und mit dem industriellen Steuercomputer (2) über ein Übertragungskabel zur Messung einer Höhe der Oberleitung und des Schwankungswertes an der Kontaktposition des Pantographen und der Oberleitung verbunden ist.

3. System nach Anspruch 1, **dadurch gekennzeichnet, dass** die Überwachungsbox (1) ferner einen Umgebungstemperatursensor (14) umfasst, der über ein Übertragungskabel mit dem industriellen Steuercomputer (2) verbunden ist.

4. System nach Anspruch 1, ferner umfassend ein Global-Positioning-System (GPS), das mit dem industrielles Steuercomputer (2) über ein Übertragungskabel verbunden ist.

5. System nach einem der Ansprüche 1 bis 4, **dadurch gekennzeichnet, dass** es zwei Gruppen der Überwachungsboxen gibt, wobei eine auf einem vorderen Teil des Daches der Lokomotive befestigt ist, um einen vorderen Pantographen zu überwachen, und die andere auf einem hinteren Teil des Daches der Lokomotive befestigt ist, um den hinteren Pantographen zu überwachen.

6. System nach einem der Ansprüche 1 bis 4, **dadurch gekennzeichnet, dass** der industrielle Steuercomputer (2) eine Hot-Swap-Festplatte (21) zur Speicherung von Überwachungsdaten umfasst.

7. System nach einem der Ansprüche 1 bis 4, **dadurch gekennzeichnet, dass** der industrielle Steuercomputer (2) ein Datenübertratungsmodul (22) umfasst, um abnormale Daten, die von der Überwachungsbox (1) erhalten wurden, an ein Bodenzentrum zu übertragen.

8. System nach Anspruch 6, **dadurch gekennzeichnet, dass** der industrielle Steuercomputer (2) ferner ein Datenübertragungsmodul (22) umfasst, um abnormale Daten, die von der Überwachungsbox (1) erhalten wurden, an ein Bodenzentrum zu übertragen.

## Revendications

1. Système de surveillance de véhicule à infrarouges pour une caténaire de voie ferrée électrifiée, comprenant un boîtier de surveillance (1) fixé sur un toit d'une locomotive, et un ordinateur de commande industriel (2) installé dans un chariot de locomotive et connecté au boîtier de surveillance (1) via un câble de signaux, le boîtier de surveillance (1) comprenant une caméra à lumière visible (12), et des angles de champ de la caméra à lumière visible (12) renfermant une position de contact d'un pantographe et le caténaire ;
**caractérisé en ce que**
l'ordinateur de commande industriel (2) est connecté à un système d'information pour le fonctionnement de la locomotive (boîtier TAX (3)) via un câble de communication afin d'obtenir une marque temporelle de circulation et une marque de distance de la locomotive ;
le boîtier de surveillance (1) comprend en outre un imageur thermique à infrarouges (11), les angles de champ de l'imageur thermique à infrarouges (11) renfermant la position de contact ;
l'imageur thermique à infrarouges (11) collecte des images infrarouges de la position de contact et les données de température de la position de contact ;
la caméra à lumière visible (12) collecte les données vidéo optiques de la position de contact ;
le câble de signaux comprend une ligne de signaux de réseau, une ligne de signaux vidéo et un câble d'alimentation ;
la ligne de signaux de réseau connecte l'imageur thermique infrarouges (11) à l'ordinateur de commande industriel (2) et transporte les images infrarouges et les données de température vers l'ordinateur de commande industriel (2) ;
la ligne de signaux vidéo connecte la caméra à lumière visible (12) à l'ordinateur de commande industriel (2) et transporte les données vidéo optiques vers l'ordinateur de commande industriel (2) ; et
le câble d'alimentation alimente électriquement l'imageur thermique à infrarouges (11) et la caméra à lumière visible (12).

2. Système selon la revendication 1, comprenant en outre un lidar (13) fixé sur le toit de la locomotive et connecté à l'ordinateur de commande industriel (2) via un câble de communication pour mesurer une hauteur de caténaire et une valeur de hauteur de désaxement à la position de contact du pantographe et du caténaire.

3. Système selon la revendication 1, **caractérisé en ce que** le boîtier de surveillance (1) comprend en outre un capteur de température ambiante (14) connecté à l'ordinateur de commande industriel (2) via un câble de communication.

4. Système selon la revendication 1, comprenant en outre un système de positionnement global (GPS) connecté à l'ordinateur de commande industriel (2) via un câble de communication.

5. Système selon une quelconque des revendications 1 à 4, **caractérisé en ce qu**'il existe deux groupes de boîtiers de surveillance, un est fixé sur une partie avant du toit de la locomotive pour surveiller un pantographe avant et l'autre est fixé sur une partie arrière du toit de la locomotive pour surveiller un pantographe arrière.

6. Système selon une quelconque des revendications 1 à 4, **caractérisé en ce que** l'ordinateur de commande industriel (2) comprend un disque dur hot swap (21) pour mémoriser les données de surveillance.

7. Système selon une quelconque des revendications 1 à 4, **caractérisé en ce que** l'ordinateur de commande industriel (2) comprend un module de communication de données (22) pour transporter les données anormales obtenues par le boîtier de surveillance (1) vers un centre au sol.

8. Système selon la revendication 6, **caractérisé en ce que** l'ordinateur de commande industriel (2) comprend en outre un module de communication de données (22) pour transporter les données anormales obtenues par le boîtier de surveillance (1) vers un centre au sol.
